Europäisches Patentamt

European Patent Office

Office européen des brevets

(11) Veröffentlichungsnummer: **0 072 485**
**B1**

(12) # EUROPÄISCHE PATENTSCHRIFT

(45) Veröffentlichungstag der Patentschrift:
**25.06.86**

(51) Int. Cl.⁴: **C 25 B 13/08, C 08 J 5/22**

(21) Anmeldenummer: **82106959.8**

(22) Anmeldetag: **02.08.82**

(54) **Verfahren zur Behandlung von Carboxylgruppen enthaltenden perfluorierten Polymermembranen für die Alkalichloridelektrolyse.**

(30) Priorität: **13.08.81 DE 3131978**
**03.05.82 DE 3216417**

(43) Veröffentlichungstag der Anmeldung:
**23.02.83 Patentblatt 83/8**

(45) Bekanntmachung des Hinweises auf die Patenterteilung:
**25.06.86 Patentblatt 86/26**

(84) Benannte Vertragsstaaten:
**BE DE FR GB IT NL SE**

(56) Entgegenhaltungen:
**DE - A - 2 442 209**
**DE - A - 3 016 339**

**CHEMICAL ABSTRACTS, Band 86, Nr. 26, 27. Juni 1977, Seite 458, Nr. 196962h, Columbus, Ohio, USA**

(73) Patentinhaber: **BAYER AG, Konzernverwaltung RP Patentabteilung, D-5090 Leverkusen 1 Bayerwerk (DE)**

(72) Erfinder: **Klotz, Helmut, Dr., Pappelweg 1, D-5068 Odenthal (DE)**
Erfinder: **Fitzky, Hans Georg, Dr., Kolpingstrasse 7, D-5068 Odenthal (DE)**

**Beschreibung**

Das Membranverfahren zur Herstellung von Chlor, Natronlauge und Wasserstoff durch Elektrolyse von Natriumchloridsolen hat in den vergangenen Jahren eine stürmische Entwicklung genommen (s. hierzu H. Hund und F.R. Minz, Chlor, Alkalien und anorganische Chlorverbindungen in Winacker, Küchler «Chemische Technologie», Band 2, Anorganische Technologie I, insbesondere Seite 410 ff (1982)). Besondere Bedeutung haben insbesondere Carboxylgruppen als saure Austauschergruppen enthaltende perfluorierte Polymermembranen gewonnen. Die Anstrengungen bei der Entwicklung von Membranen gehen, nachdem hinreichend solebeständige Membranen zur Verfügung stehen, insbesondere in Richtung auf die Erniedrigung des spezifischen Energieverbrauchs pro Tonne Chlor bzw. Natriumhydroxid.

Der spezifische Energieverbrauch ist insbesondere (bei vorgegebener Stromdichte) durch das Verhältnis von Stromausbeute und Zellenspannung bei der Elektrolyse bestimmt. Ein Teil der Zellenspannung fällt über der Membran selbst ab. Die Stromausbeute gibt an, wieviel Prozent der durch die Elektrolysezelle hindurchgegangenen Strommenge zur Bildung von Natriumhydroxid geführt hat. Der übrige Anteil der durch die Elektrolysezelle hindurchgegangenen Strommenge hat dann zu unerwünschten elektrolytischen Nebenreaktionen geführt.

Die Herstellung von Carboxylgruppen enthaltenden perfluorierten Polymermembranen ist Stand der Technik. Zum Beispiel werden solche Herstellungsverfahren in den Deutschen Offenlegungsschriften 2 630 584, 2 746 416 und 2 822 493 beschrieben.

Die vorliegende Erfindung betrifft nun ein Verfahren zur Behandlung solcher Membranen in einer Coronaentladung.

Unter Coronaentladung versteht die Technik eine spezielle Form von Gasentladungen. Zu ihrer Charakterisierung wird auf Drost «Plasmachemie», Seite 66 ff, (1978) verwiesen.

Die Behandlung von Folien in Coronaentladungen ist an sich bekannt. Sie wird beispielsweise eingesetzt zur Lösung von Haftproblemen, beim Klebfähigmachen, beim Bedrucken, Lackieren oder Kaschieren von organischen Folien.

Auch die Behandlung in einer Coronaentladung von perfluorierten, ionenaustauschenden Polymermembranen für die Alkalichloridelektrolyse wurde bereits gemäss Japanischer Offenlegungsschrift 20 980/77 vorgeschlagen. Nach diesem Stand der Technik soll die Behandlung im Bereich zwischen 130 und 200 °C, vorzugsweise bei 300 bis 500 KHz Coronafrequenz, erfolgen. Damit soll eine Verbesserung der Stromausbeute erreicht werden. Allerdings wird nach dem Stand der Technik eine Erhöhung des Membranwiderstandes, d.h. auch eine Erhöhung der Zellenspannung, gleichzeitig erhalten.

Ferner soll die Coronabehandlung nach dem Stand der Technik für beliebige Ionenaustauschergruppen wirksam sein, so insbesondere auch für nur Sulfonsäuregruppen enthaltende perfluorierte Polymermembranen.

Es wurde nun gefunden, dass die Membrantemperatur bei der Coronabehandlung von Carboxylgruppen als ionenaustauschende Gruppen enthaltenden perfluorierten Polymermembranen von ausschlaggebender Bedeutung ist.

Gegenstand der vorliegenden Erfindung ist daher ein Verfahren zur Behandlung von Carboxylgruppen als saure Austauschergruppen enthaltenden perfluorierten Polymermembranen in einer Coronaentladung, das dadurch gekennzeichnet ist, dass die Membran während der Entladungsbehandlung auf einer Temperatur von unterhalb 80 °C gehalten wird. Vorzugsweise soll die Temperatur bei der Behandlung zwischen −20 und +50 °C, besonders bevorzugt zwischen −10 und +22 °C, gehalten werden.

Durch die erfindungsgemässe Coronabehandlung wird der Membranwiderstand beim Einsatz in der Alkalichloridelektrolyse derart erniedrigt, dass bei einer Elektrolysestromdichte von 2 KA/m² eine um mehr als 300 Millivolt erniedrigte Zellenspannung resultiert.

Durch die Coronabehandlung bei relativ niedrigen Temperaturen wird der Wassergehalt der Membran praktisch nicht verändert, so dass die Membran besser dimensionsstabil bleibt, die Membranen über längere Einsatzzeiten bei der Elektrolyse konstantere Zellenspannungen aufweisen und dass die Standzeit in der Elektrolysezelle erhöht wird. Die Stromausbeute wird durch die erfindungsgemässe Behandlung nicht verändert. Der spezifische Energieverbrauch in der Elektrolysezelle wird demnach um ca. 10% oder mehr reduziert.

Die Coronabehandlung selbst kann in bekannter Weise durchgeführt werden.

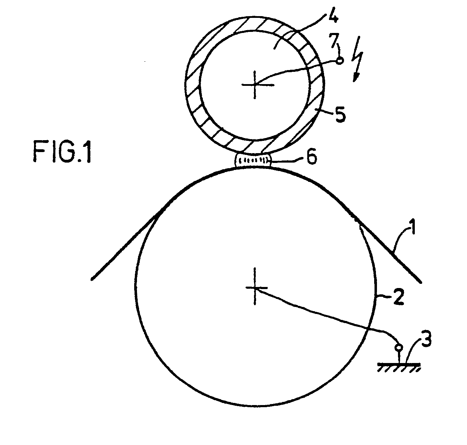

Fig. 1 zeigt eine Vorrichtung zur Durchführung des erfindungsgemässen Verfahrens: Die Membran 1 wird über die geerdete Walze 2 transportiert. 3 bezeichnet die Erdung. Die Coronawalze 4 befindet sich auf Hochspannung 7. Die Hochspannung wird durch einen nicht gezeichneten Wechselspannungsgenerator erzeugt. Zur Vermeidung stromstarker Einzelentladungen zugunsten einer Vielzahl intensitätsschwacher Einzelentladungen ist die Coronawalze 4 vorzugsweise durch ein Dielektrikum 5 isoliert. Als Dielektrikum eignen sich z.B. Teflon® oder besonders bevorzugt Quarzglas. Die Coronaentladung 6 brennt in dem Spalt zwischen Coronawalze 4 und der geerdeten Walze. Der Abstand zwischen Membran 1 und Coronawalze 4 wird vorzugsweise auf 0,5 bis 1 mm eingestellt, um eine feinstrukturierte Coronaentladung zu erzielen.

Die über die Leistungseinstellung des Generators geregelte Intensität der Coronaentladung 6 bestimmt die Aufheizung der Membran während der Coronabehandlung.

Die Dosis der Bestrahlung bei der Coronaentladung beträgt vorzugsweise 0,1 bis 10 Ah/m² Membranfläche, vorzugsweise mehr als 0,5 Ah/m², besonders bevorzugt 2 bis 5 Ah/m². Geringere Bestrahlungsdosen haben sich als weniger wirksam erwiesen. Höhere Dosen sind im Prinzip möglich, bringen jedoch keine weitere Verbesserung der Membran. Ein schädlicher Einfluss höherer Dosen wurde nicht festgestellt.

Wesentlich ist die Einhaltung der erfindungsgemässen Temperatur.

Um nun die Temperatur der Membran während der Coronabehandlung in dem erfindungsgemässen Bereich zu halten, sind besondere Massnahmen zur Ableitung der Wärme notwendig. Welche Massnahme im einzelnen anzuwenden ist, ist nicht sehr kritisch. Man wird die Massnahme nach den apparativen Gegebenheiten auswählen. Zum Beispiel kann ein Luftstrom durch die Entladungszone geblasen werden. Bei niedrigerer gewünschter Membrantemperatur oder bei höherer Entladungsintensität kann es zweckmässig sein, einen gekühlten Luftstrom oder Kohlendioxidstrom anzuwenden. Es ist auch möglich, die geerdete Walze 2 mit einer Flüssigkeitskühlung zu versehen.

Im allgemeinen ist es jedoch schwierig, allein durch Kühlung die Temperatur der Membran bei der Coronabehandlung ausreichend niedrig zu halten, da die Intensität der Corona bei kommerziell verfügbaren Coronaentladungsgeräten im allgemeinen nicht beliebig niedrig eingestellt werden kann, ohne dass die Entladung zu inhomogen wird. Bei zu hoher Intensität, d.h. bei zu hoher Bestrahlungsrate, ist die dabei entstehende Wärme jedoch nicht hinreichend schnell abzuführen, insbesondere da auch die Membran selbst ein guter Wärmeisolator ist. Feinstruktuierte Coronaentladungen erfordern bei Atmosphärendruck (Luft) Stromdichten von 5 bis 50 A/m². Solche Bestrahlungsintensitäten führen innerhalb weniger Sekunden zu einer starken Aufheizung der Membran, der auch bei sehr aufwendiger Kühlung kaum entgegengewirkt werden kann.

Erfindungsgemäss bevorzugt erfolgt daher die Coronabehandlung in Intervallen, wobei zwischen den einzelnen Bestrahlungsintervallen die Abkühlung leicht gewährleistet werden kann. Die einzelnen Bestrahlungsintervalle sind vorzugsweise so gewählt und erfolgen vorzugsweise in einem solchen Abstand, dass eine mittlere Bestrahlungsrate von unter 5 A/m² resultiert. Besonders bevorzugt soll die mittlere Bestrahlungsrate 2 A/m² nicht übersteigen, da bei geringen Bestrahlungsraten der Aufwand zur Kühlung auch gering gehalten werden kann. Selbstverständlich kann die mittlere Bestrahlungsrate beliebig niedrig gehalten werden, jedoch führt dies zu einer unerwünscht langen Behandlungsdauer.

Die intermittierende Coronabehandlung wird zweckmässig so durchgeführt, dass die Membran mit relativ hoher Geschwindigkeit durch eine Vielzahl von hintereinandergeschalteten Coronaentladungen geführt wird. Besonders bevorzugt wird die Behandlung so durchgeführt, dass ein endliches Membranstück, dessen Länge dem Umfang der Metallwalze 2 entspricht, auf dem Umfang der Metallwalze befestigt wird und die Metallwalze mit einer Geschwindigkeit von z. B. 1 U/sec rotiert.

Die Membran wird dann pro Sekunde einmal durch die Entladungszone geführt, wobei die Behandlungszeit eine 20stel bis eine 50stel Sekunde betragen kann. Zweckmässig wird in die Entladungszone zusätzlich ein kühlender Gasstrom eingeblasen. Die notwendige Gesamtdosis der Behandlung wird dann z.B. nach 1000 bis 5000 Einzeldosen erreicht. Sorgt man für gute Kühlung der Membran während der Nicht-Bestrahlungsphasen, ist es auch möglich, mehrere Coronawalzen 4 über den Umfang der Metallwalze 2 zu verteilen, so dass während einer Umdrehung der Metallwalze 2 mehrere Einzeldosen bestrahlt werden.

Die Frequenz der Coronaentladung ist für das erfindungsgemässe Verfahren relativ unkritisch. Sehr hohe Frequenzen haben den Nachteil, dass Hochspannungsgeneratoren mit Senderöhren eingesetzt werden müssen. Erfindungsgemäss bevorzugt sind daher Frequenzen unter 60 KHz, für die Hochspannungsgeneratoren mit Halbleiterbauelementen (Tyristoren) zur Verfügung stehen. Besonders bevorzugt sind Frequenzen zwischen 1 und 30 KHz, ganz besonders bevorzugt zwischen 10 und 20 KHz. Bei der Erzeugung der Coronaentladung kann eine Spannung von 1 kV bis 20 kV eingesetzt werden.

Die erfindungsgemäss behandelten Membranen können (gegebenenfalls nach weiterer Vorbehandlung) zur in üblicher Weise für die Alkalichloridelektrolyse eingesetzt werden.

Vorzugsweise soll die bestrahlte Seite der Membran, d.h. die der Coronawalze 4 zugewandte Seite, als Kathodenseite in der Elektrolysezelle verwendet werden.

Die vorliegende Erfindung wird nachfolgend ohne Beschränkung der Allgemeinheit anhand von Beispielen erläutert:

Beispiel 1

Eine kommerziell erhältliche perfluorierte Polymermembran des Typs Nafion (Nafion ist ein Warenzeichen der Fa. Dupont) 324 der Fa. Dupont mit Sulfonsäureaustauschergruppen wurde auf der Katholytseite entsprechend Beispiel 28 der Patentanmeldung DE-A-2 630 584 substituiert, indem die Sulfonsäure- durch Carboxylgruppen ersetzt wurden. Der prozentuale Anteil an Carboxylgruppen wird mit zunehmendem Abstand von der Katholytoberfläche in Richtung auf die Anolytoberfläche geringer.

Die erhaltene, carboxylgruppenhaltige Membran wurde in zwei Teile A und B geschnitten. Ein Teil (A) der Membran wurde unbehandelt belassen. Ein Teil (B) der Membran wurde einer Coronabehandlung in einer Vorrichtung gemäss Fig. 1 unterworfen. Dabei wurde die Membran derart auf dem Umfang der Walze 2 befestigt, dass die Katholytseite der Membran der Walze 4 zugewandt war. Die Coronaeinwirkung erfolgte an Luft mit ca. 50% rel. Feuchte (Raumtemperatur) bei einer Frequenz von 150 kHz und einer Spannung von 5 kV. Die Walze wurde mit 1 Umdrehung pro Sekunde rotiert, so dass pro Sekunde einmal intermittierend bestrahlt wurde, bis die Gesamtdosis 3,8 Ah/m² betrug. Die Temperatur der Membran war während der gesamten Behandlungsdauer nie höher als 80 °C.

Beide Teile der Membran wurden dann in parallel betriebene identische Versuchselektrolysezellen eingebaut.

Als Anolyt wurde reinste NaCl-Sole mit einer Konzentration von ca. 314 g NaCl/l Sole benutzt. Die Zellentemperatur lag bei 80 °C. Die Katholytkonzentration wurde auf ca. 20% NaOH eingestellt. Als Stromdichte wurde bei allen Versuchen eine möglichst hohe, nämlich 3,1 kA/m², gewählt.

Die gemessenen Werte für Zellenspannung, Stromausbeute und spezifischen Energieverbrauch bei der Elektrolyse sind in der nachfolgenden Tabelle dargestellt.

Beispiel 2

Eine kommerziell erhältliche perfluorierte Polymermembran mit Sulfonsäureaustauschergruppen wurde entsprechend Beispiel 1 durch Austausch der Sulfonsäuregruppen gegen Carbonsäuregruppen modifiziert.

Mit der Membran wurde 14 Tage lang eine Versuchselektrolysezelle unter den Bedingungen des Beispiel 1 betrieben. Die erhaltenen Messwerte sind in der nachfolgenden Tabelle als Beispiel 2A dargestellt.

Die Membran wurde anschliessend aus der Zelle ausgebaut, entsprechend Beispiel 1 einer Coronabehandlung unterworfen und erneut in die Versuchselektrolysezelle eingebaut.

Bei sonst gleichen Versuchsbedingungen ergaben sich die in der nachfolgenden Tabelle unter Beispiel 2B dargestellten Messwerte:

Tabelle

| Beispiel Nr. | Behandlung in Corona | Stromdichte kA/m² | Zellenspannung (Volt) | Stromausbeute (%) | spez. Energie- verbrauch (kWh/t NaOH) |
|---|---|---|---|---|---|
| 1A | nein | 3,1 | 4,11 (mV) 320 | 99,2 | 2781 |
| 1B | ja | 3,1 | 3,79 | 97,0 | 2622 |
| 2A | nein | 3,1 | 4,09 290 | 98,0 | 2801 |
| 2B | ja | 3,1 | 3,80 | 97,0 | 2629 |
| 3A | nein | 2 | 3,50 300 | 92,3 | 2545 |
| 3B | ja | 2 | 3,20 | 93,1 | 2307 |
| 4A | nein | 2 | 3,48 310 | 93,0 | 2511 |
| 4B | ja | 2 | 3,17 | 92,5 | 2300 |

Beispiel 3

Eine kommerziell erhältliche hydrolysierte Membran des Typs Flemion HB (Flemion ist ein Warenzeichen der Fa. Asahi Glass) mit den Massen 0,20 × 0,20 m² wurde auf eine Metallwalze von 58 mm Durchmesser und 200 mm Länge aufgebracht. Die Coronawalze hatte einen Durchmesser von 15 mm und war von einem Quarzmantel von 1,5 mm Dicke umgeben (s. Fig. 1). Die Metallwalze rotierte mit 1 Umdrehung/Sekunde. Es wurde 3 Stunden lang bei einem Entladestrom von 25 mA behandelt. Die Gesamtdosis der Behandlung betrug

$$\frac{3 \ h \cdot 0,025 \ A}{0,04 \ m^2} = 1,86 \ Ah/m^2$$

Die Membrantemperatur wurde auf +25 ± 5 °C mit Hilfe eines Luftstroms gehalten. Die Oberflächentemperatur wurde mit einem Infrarot-Temperaturmessgerät Raynger II gemessen und danach die Kühlung reguliert. Die Corona-Frequenz betrug 10 kHz.

Diese Membran wurde in eine Elektrolysezelle zur Herstellung von Chlor, Wasserstoff und Natronlauge eingesetzt und der erzielte Spannungsabfall zwischen Anode und Kathode mit dem einer gleichen, aber nicht vorbehandelten Membran verglichen. Der Abstand zwischen einer aktivierten Titananode und einer Edelstahlkathode betrug 3 mm. Als Anolyt wurde reinste NaCl-Sole mit einer Konzentration von ca. 290 g NaCl/l Sole benutzt. Die Zellentemperatur lag zwischen 85–89 °C, die Laugenkonzentration wurde zwischen 33–38% NaOH einreguliert.

Bei einer Stromdichte von 2 kA/m² wurden zwei elektrisch hintereinandergeschaltete Membranzellen betrieben, wobei die eine mit einer unbehandelten, die andere mit der vorbehandelten Membran versehen worden war. Bei sonst gleichen Versuchsbedingungen ergaben sich die in Tabelle 1 dargestellten Messwerte.

Beispiel 4

Eine gleiche Membran wie in Beispiel 3 wurde bei +70 °C aber unter sonst gleichen Corona-Bedingungen vorbehandelt. Die Absenkung der Zellenspannung lag in gleicher Grössenordnung wie bei Beispiel 3. Im Gegensatz zur Vorbehandlung bei der tieferen Temperatur trat aber im Laufe der Elektrolyse eine stärkere Schwankung des spezifischen Stromverbrauchs auf. Insgesamt war die Standzeit der Membran um 30% geringer.

Beispiel 5

In zwei sogenannte «Zero-gap-Zellen», d.h. in eine Zelle, in der die Elektroden direkt die Membran berühren, wurde einmal eine bei +20°C vorbehandelte Membran, im anderen Fall eine nicht vorbehandelte Membran eingebaut. Beide Elektroden waren aus einer Vielzahl elektrisch kontaktierten, parallel liegender «Messer» oder Streifen hergestellt, die mit ihrer Stirnseite jeweils auf der Membran auflagen. Die Anode bestand aus aktiviertem Titan, die Kathode aus Nickel. Unter den sonst gleichen Elektrolysebedingungen der Beispiele 3 und 4 ergaben sich folgende Ergebnisse:

| Beispiel | Vorbehandlung bei 20°C | Zellenspannung (Volt) | Stromausbeute (%) | Spez. Stromverbrauch kWh/t NaOH |
|---|---|---|---|---|
| 5 A | nein | 3,10 | 93 | 2,237 |
| 5 B | ja | 2,78 | 92,5 | 2,017 |

## Patentansprüche

1. Verfahren zur Behandlung von Carboxylgruppen als saure Ionenaustauschergruppen enthaltenden perfluorierten Polymermembranen in einer Coronaentladung, dadurch gekennzeichnet, dass die Membran während der Entladungsbehandlung auf einer Temperatur von unterhalb 80°C gehalten wird.

2. Verfahren nach Anspruch 1, dadurch gekennzeichnet, dass die Temperatur zwischen −20 und +50°C, vorzugsweise zwischen −10 und +22°C, gehalten wird.

3. Verfahren nach einem der Ansprüche 1 oder 2, dadurch gekennzeichnet, dass die Coronabehandlung in Intervallen vorgenommen wird.

4. Verfahren nach einem der Ansprüche 1 bis 3, dadurch gekennzeichnet, dass die Coronabehandlung bei einer mittleren Bestrahlungsrate von unterhalb 5 A/m², vorzugsweise unterhalb 2 A/m², durchgeführt wird.

5. Verfahren nach einem der Ansprüche 1 bis 4, dadurch gekennzeichnet, dass bei der Behandlung eine Dosis von 0,1 bis 10 Ah/m² Membranfläche angewendet wird.

6. Verfahren nach einem der Ansprüche 1 bis 5, dadurch gekennzeichnet, dass die Frequenz der Coronaentladung zwischen 1 kHz und 60 kHz, bevorzugt zwischen 1 kHz und 30 kHz, besonders bevorzugt zwischen 5 kHz und 15 kHz, liegt.

7. Verfahren nach einem der Ansprüche 1 bis 6, dadurch gekennzeichnet, dass zur Erzeugung der Coronaentladung eine Spannung von 1 kV bis 20 kV eingesetzt wird.

8. Verwendung der Membranen nach einem der Ansprüche 1 bis 7 bei der Elektrolyse von Natriumchlorid zur Herstellung von Natriumhydroxid, Chlor und Wasserstoff.

## Claims

1. Process for the treatment of perfluorinated polymer membranes containing carboxyl groups as acid ion exchanger groups in a corona discharge, characterised in that the membrane is kept at a temperature of bellow 80°C during the discharge treatment.

2. Process according to Claim 1, characterised in that the temperature is kept at between −20 and +50°C, preferably at between −10 and +22°C.

3. Process according to one of Claims 1 or 2, characterised in that the corona treatment is carried out at intervals.

4. Process according to one of Claims 1 to 3, characterised in that the corona treatment is carried out at an average rate of irradiation of below 5 A/m², preferably of below 2 A/m².

5. Process according to one of Claims 1 to 4, characterised in that a dose of 0.1 to 10 Ah/m² of membrane surface is used in the treatment.

6. Process according to one of Claims 1 to 5, characterised in that the frequency of the corona discharge is between 1 kHz and 60 kHz, preferably between 1 kHz and 30 kHz, and particularly preferably between 5 kHz and 15 kHz.

7. Process according to one of Claims 1 to 6, characterised in that a voltage of 1 kV to 20 kV is used to produce the corona discharge.

8. Use of the membranes according to one of Claims 1 to 7 in the electrolysis of sodium chloride for the production of sodium hydroxide, chlorine and hydrogen.

## Revendications

1. Procédé de traitement de membranes polymères perfluorées, contenant des groupes carboxyle en tant que groupes acides d'échange d'ions, dans une décharge corona, caractérisé en ce que la membrane est maintenue pendant le traitement de décharge à une température inférieure à 80°C.

2. Procédé selon la revendication 1, caractérisé en ce que la température est maintenue entre −20 et +50°C, de préférence entre −10 et +22°C.

3. Procédé selon l'une des revendications 1 ou 2, caractérisé en ce que le traitement corona est effectué par intervalles.

4. Procédé selon l'une des revendications 1 à 3, caractérisé en ce qu'on exécute le traitement corona à un taux moyen d'irradiation inférieur à 5 A/m², de préférence inférieur à 2 A/m².

5. Procédé selon l'une des revendications 1 à 4, caractérisé en ce que dans le traitement on applique une dose de 0,1 à 10 Ah/m² de surface de membrane.

6. Procédé selon l'une des revendications 1 à 5, caractérisé en ce que la fréquence de décharge corona se situe entre 1 kHz et 60 kHz, de préférence entre 1 kHz et 30 kHz, tout spécialement entre 5 kHz et 15 kHz.

7. Procédé selon l'une des revendications 1 à 6, caractérisé en ce que pour la production de la décharge corona on utilise une tension de 1 kV à 20 kV.

8. Utilisation des membranes selon l'une des revendications 1 à 7 dans l'électrolyse du chlorure de sodium pour la fabrication d'hydroxyde de sodium, de chlore et d'hydrogène.

FIG.1